(19) Europäisches Patentamt
European Patent Office
Office européen des brevets

(11) **EP 1 744 081 B1**

(12) **FASCICULE DE BREVET EUROPEEN**

(45) Date de publication et mention
de la délivrance du brevet:
**21.01.2009 Bulletin 2009/04**

(51) Int Cl.:
*F16H 55/16* *(2006.01)*          *G04B 13/02* *(2006.01)*

(21) Numéro de dépôt: **05405440.8**

(22) Date de dépôt: **15.07.2005**

(54) **Engrenage à compensation de défauts pour mécanisme de précision**

Verzahnung mit Fehlerkompensation für Präzisionsmechanismen

Gearing with error compensation for precision mechanisms

(84) Etats contractants désignés:
**CH DE FR GB LI**

(43) Date de publication de la demande:
**17.01.2007 Bulletin 2007/03**

(73) Titulaire: **ROLEX SA**
**1211 Genève 24 (CH)**

(72) Inventeur: **Daout, Jérôme**
**1180 Rolle (CH)**

(74) Mandataire: **Savoye, Jean-Paul et al**
**Moinas & Savoye S.A.,**
**42, rue Plantamour**
**1201 Genève (CH)**

(56) Documents cités:
**EP-A- 1 380 772          DE-A1- 3 934 377**
**US-A- 4 127 041**

• **PATENT ABSTRACTS OF JAPAN vol. 008, no. 238 (M-335), 31 octobre 1984 (1984-10-31) & JP 59 117951 A (HITACHI SEISAKUSHO KK), 7 juillet 1984 (1984-07-07)**
• **PATENT ABSTRACTS OF JAPAN vol. 012, no. 378 (M-751), 11 octobre 1988 (1988-10-11) & JP 63 130961 A (KIYOUIKU HAGURUMA KOGYO KK; others: 01), 3 juin 1988 (1988-06-03)**

**Description**

La présente invention se rapporte à un engrenage à compensation de défauts pour mécanisme de précision, notamment un mécanisme d'horlogerie, dans lequel au moins certaines des dents régulièrement réparties d'au moins un des mobiles dentés partenaires présentent des zones déformables de manière élastique dans le sens de leurs épaisseurs respectives, les dents en prise desdits mobiles présentent au moins deux points de contact simultanés.

On a déjà proposé plusieurs engrenages à rattrapage de jeu du type mentionné ci-dessus. C'est notamment le cas du JP 63 130961 A, du US 4 127 041 et du EP 1 380 772.

Les engrenages ont le plus souvent du jeu pour tenir compte de l'ensemble des tolérances qui affectent nécessairement les conditions d'engrenage sinon, on pourrait choisir un profil de dent sans jeu, comme ceci est confirmé par la « Théorie Générale de l'Horlogerie » L. Defossez, 1950, tome premier, p. 210, édition Chambre Suisse de l'Horlogerie, La Chaux-de-Fonds (Suisse). Le jeu est la différence entre le pas et la somme des largeurs de deux dents respectives des deux roues; le jeu est une longueur généralement exprimée en fonction du pas. Le jeu, le pas et la largeur des dents auxquels on se réfèrera dans la description qui suit sont tous exprimés en longueurs mesurées sur le diamètre primitif des mobiles dentés. Le diamètre primitif est le diamètre du cercle primitif d'une roue dentée qui roulerait sans glisser sur le cercle primitif de la roue partenaire. Le pas est la distance mesurée sur le cercle primitif entre deux points homologues de deux dents consécutives (L. Defossez cité p. 149). Enfin le profil théorique de la dent est le profil d'une dent sans jeu d'un engrenage dont les mobiles auraient des dents parfaites, seraient parfaitement concentriques et auraient des entre-axes parfaits, sans aucun jeu dans les paliers etc.

L'ensemble des documents susmentionnés de l'état de l'art aborde essentiellement le problème de l'élasticité à conférer aux dents, mais pratiquement pas celui du dimensionnement des dents.

Le EP 1 380 772 indique comme condition que les dents de la roue et les dents du pignon ont la même épaisseur e et la même largeur de vide. La raison pour laquelle cette condition d'égalité est nécessaire selon ce document pour qu'un engrenage soit sans ébat n'est pas expliquée. On peut cependant constater que si un tel engrenage avec des dents ayant la même épaisseur et la même largeur de vide constitue un cas particulier d'un engrenage sans ébat, ceci n'est vrai - que dans le cas où les conditions théoriques idéales sont remplies. Il s'agit donc d'une solution théorique. En effet, les conditions énoncées ne permettent pas de supprimer le jeu lorsque l'entre-axe des mobiles est supérieur à la valeur requise, en cas de mal-rond, de diamètre trop petit notamment.

Quant au JP 63 130961 A, il se contente de dire que l'épaisseur des dents doit être déterminée pour supprimer le jeu. On peut certes se douter que si il y a du jeu c'est parce que l'épaisseur des dents est trop faible. On a vu précédemment pourquoi l'épaisseur des dents est plus faible que l'épaisseur du profil théorique. Le fait de dire que l'épaisseur des dents doit être déterminée pour supprimer le jeu ne dit absolument pas comment arriver à ce but. Il faut donc constater que jusqu'ici aucun document ne donne une indication relative à une règle permettant de rattraper substantiellement le jeu d'engrenage en tenant compte de l'ensemble des défauts et influences susceptibles de créer ce jeu et sans pour autant prendre le risque d'un blocage de l'engrenage sous prétexte d'en supprimer le jeu. Il ne faut pas oublier en effet que le rôle essentiel d'un engrenage est de transmettre un couple avec le meilleur rendement possible et que la suppression du jeu doit être compatible avec cette fonction.

Le JP 59 117951 qui est considéré comme constituant l'état de la technique le plus proche, se rapporte à un engrenage pour réducteur de vitesse dans lequel le jeu est supprimé en utilisant côte à côte deux roues dentées présentant les mêmes dentures et qui sont rendues solidaires l'une de l'autre pour former une seule roue dentée. L'une des roues dentées est en un matériau rigide et l'autre en un matériau élastique résistant à l'abrasion. La roue qui est en matériau rigide est destinée à transmettre un couple et une position angulaire et l'autre est destinée à supprimer le jeu par la déformation élastique de ses dents. Les dents de la roue en matériau élastique ont une épaisseur plus grande que les dents de la roue en matériau rigide, de manière à être déformées lorsqu'elle sont en prise avec les dents de la roue partenaire.

Une telle solution est tout simplement inacceptable dans le cas d'un mécanisme d'horlogerie, plus particulièrement un mécanisme de montre bracelet et ceci pour de nombreuses raisons. Une telle solution implique en particulier un doublement de l'encombrement en hauteur des engrenages, aussi bien celui de la roue compensatrice que celui de la roue partenaire. Or la question d'encombrement est un facteur primordial dans un mécanisme de montre bracelet.

Vient ensuite le problème de la liaison rigide entre les deux roues côte à côte qui pose des problèmes de précision d'alignement qui, compte tenu des très faibles dimensions des dents, de quelques dixièmes de millimètres dans le cas d'un mécanisme de montre bracelet, introduit forcément une marge d'erreur supplémentaire. Un tel assemblage ajoute en outre une nouvelle opération extrêmement délicate.

La présence de deux matériaux crée des problèmes de tensions en raison des différences de coefficients de dilatation.

Une telle solution pénalise également le rendement de la transmission de couple par l'engrenage en raison du coefficient de friction plus élevé entre par exemple un élastomère utilisé comme matériau de la roue à dents déformables et l'acier d'un pignon partenaire, en raison aussi de la faible dureté de ce matériau, du contact mou qui augmente les surfaces de contact et donc le frottement. Or le rendement de la chaîne de transmission du barillet renfermant le ressort moteur, à l'échappement du système régulateur, constitue un facteur important pour la qualité de la montre.

Dans un rouage d'horlogerie on a des pressions élevées sur les dents en raison des couples à transmettre, en sorte que la présence d'un matériau déformable augmente les surfaces de contact et donc l'usure. Avec une roue en matière plastique le rendement serait aussi fonction de la température en raison du coefficient de dilatation élevé d'un tel matériau. Il en est de même pour l'humidité qui fait gonfler les matières plastiques. Etant donné qu'un mécanisme d'horlogerie de qualité doit avoir une durée de vie de plusieurs dizaines d'années, une matière plastique ne permet pas de satisfaire cette exigence. Un tel matériau poserait aussi des problèmes de dégazage, créerait des charges électrostatiques et poserait des problèmes de résistance aux bains de lavage.

Le but de la présente invention est de remédier, au moins en partie, aux inconvénients susmentionnés.

A cet effet, cette invention a pour objet un engrenage à compensation de défauts pour mécanisme de précision, notamment d'horlogerie, selon la revendication 1.

L'avantage principal de l'engrenage à compensation de défauts, objet de la présente invention est de définir les conditions pour le dimensionnement des dents à rattrapage de jeu qui prennent en compte l'ensemble des éléments perturbateurs et permettent d'obtenir, dans tous les cas, un rattrapage de jeu au moins substantiel, sinon total, même dans les conditions extrêmes admises par les tolérances prescrites, ce qui n'était manifestement pas le cas des solutions proposées jusqu'ici.

Les dessins annexés illustrent, schématiquement et à titre d'exemple, le problème à résoudre et différentes formes d'exécutions d'engrenages à compensation de défauts aptes à apporter, même dans les cas extrêmes, une solution au moins partielle à ce problème.

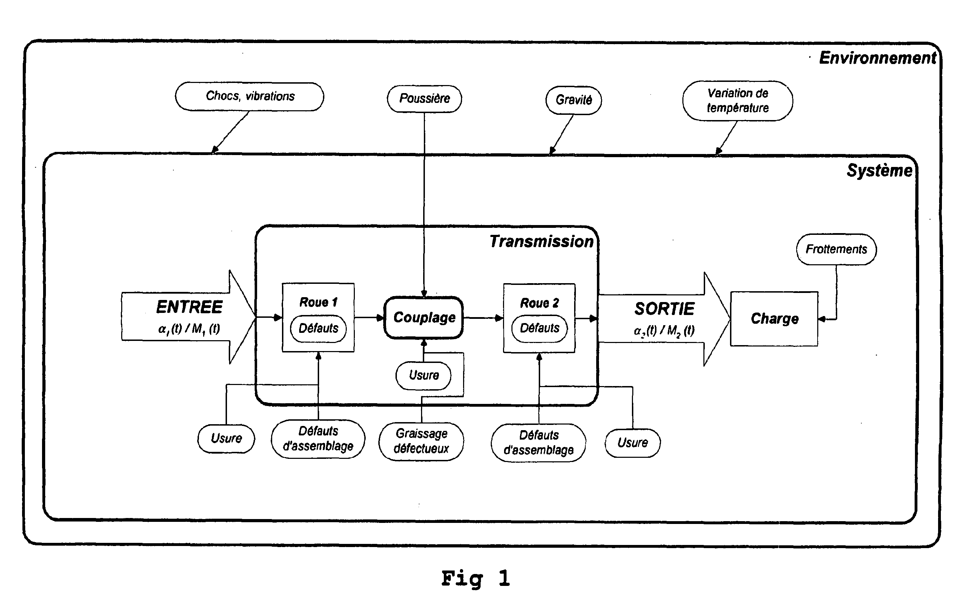

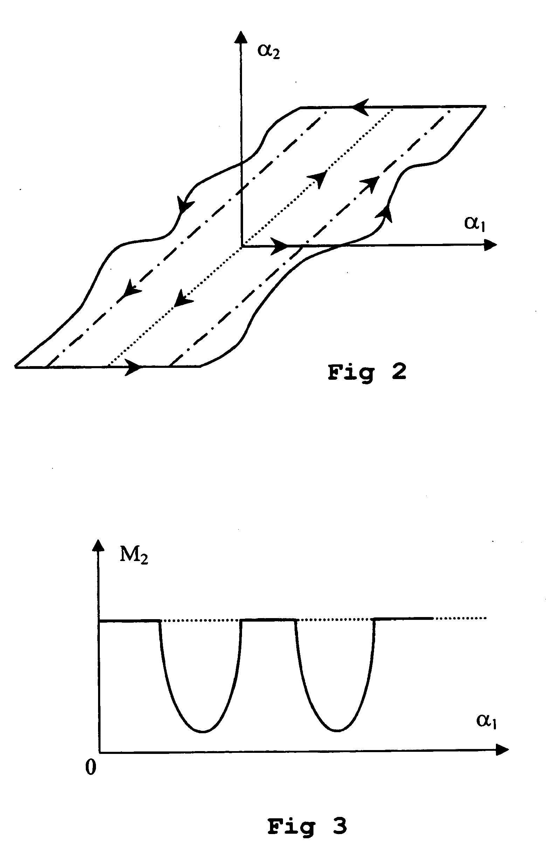

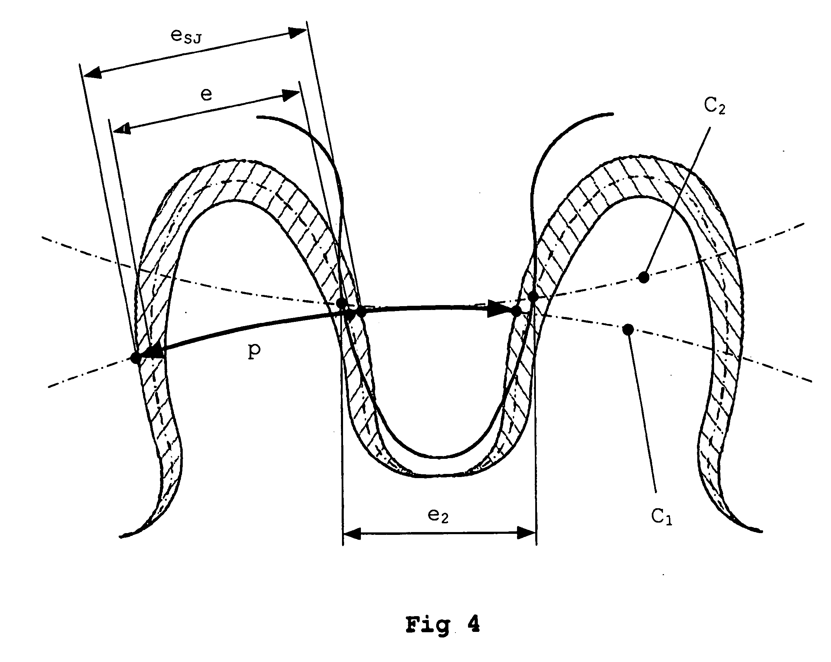

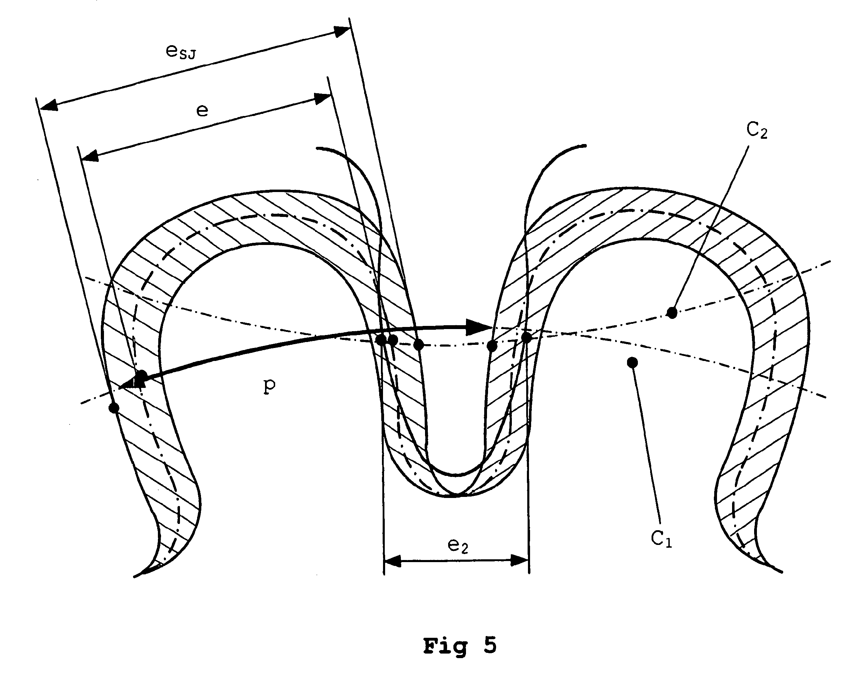

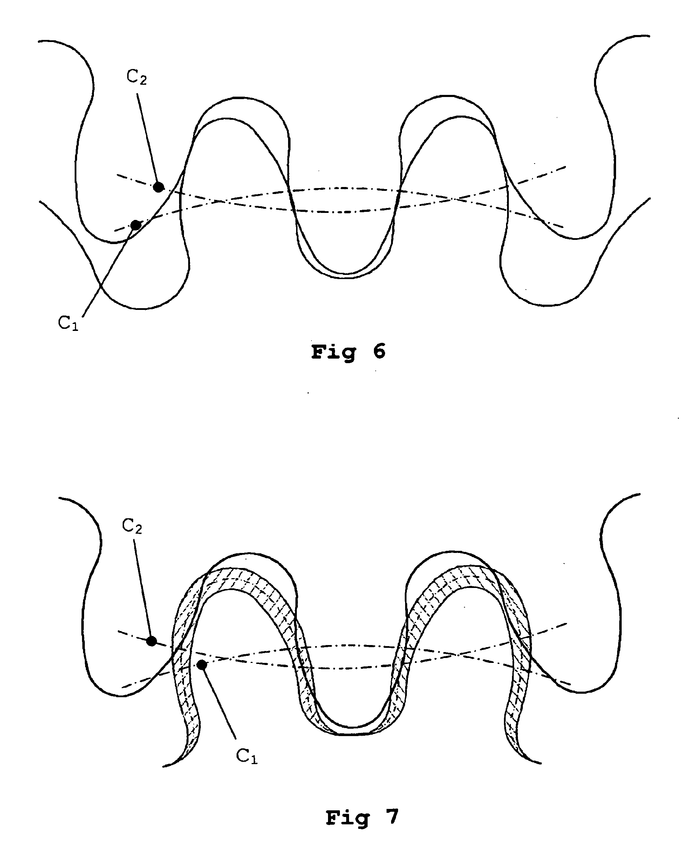

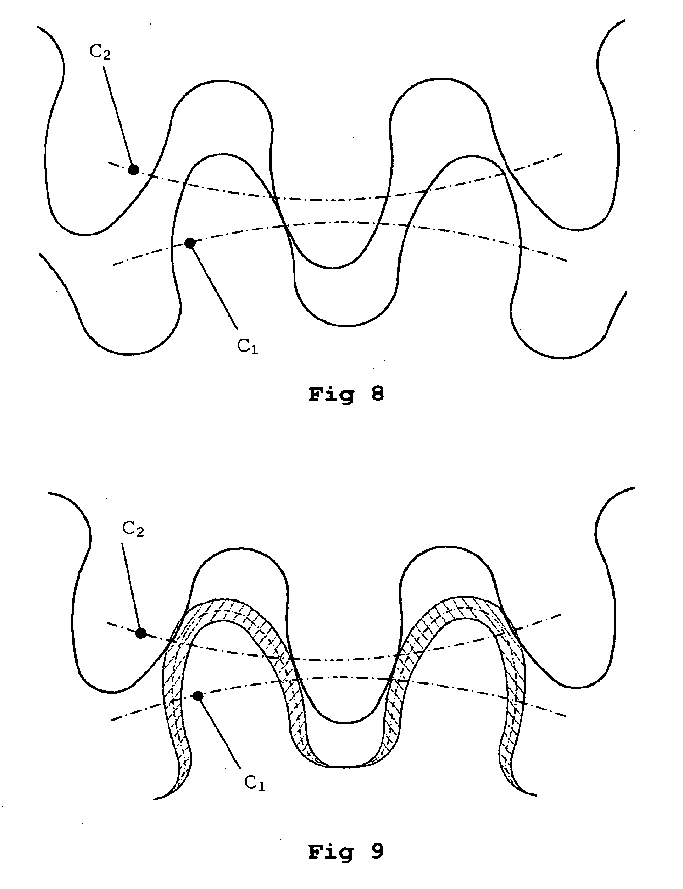

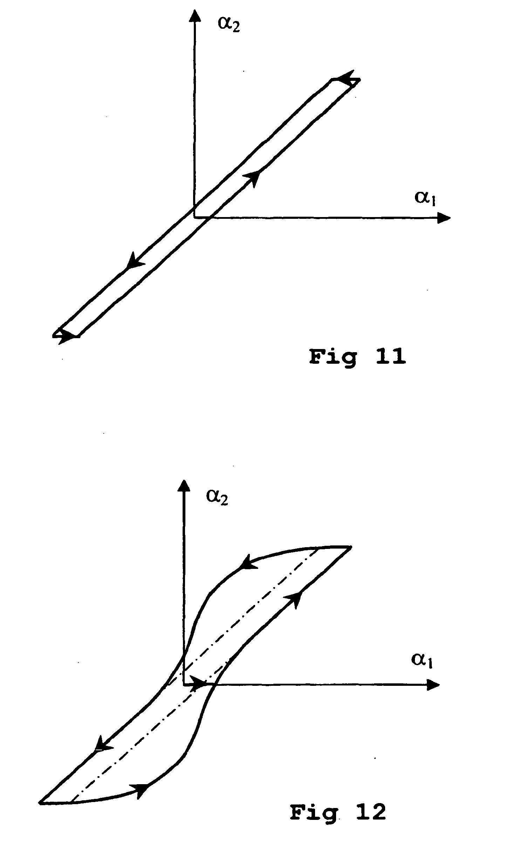

La figure 1 est un schéma fonctionnel indiquant les paramètres influents et les défauts d'un engrenage; la figure 2 est un diagramme de transmission entre deux roues dentées sans compensation; la figure 3 est un diagramme du couple transmis en cas de serrage des dentures ; la figure 4 est une vue partielle d'une forme d'engrenage à compensation des défauts destinée à expliquer le modèle de dimensionnement de cet engrenage; la figure 5 est une vue semblable à la figure 4 destinée à définir les limites de l'épaisseur des dents de compensation; la figure 6 est une vue partielle d'un engrenage normal avec entre-axes trop faible; la figure 7 est une vue partielle d'un engrenage à compensation du défaut de la figure 6; la figure 8 est une vue partielle d'un engrenage normal avec entre-axes trop grand; la figure 9 est une vue partielle de l'engrenage à compensation de la figure 7 montrant qu'il permet de compenser les défauts des figures 6 et 8; la figure 10 est une vue partielle d'un engrenage à compensation des défauts avec une roue à dents à rattrapage en prise avec une roue à dents normales dont une dent est déformée; les figures 11 et 12 sont deux diagrammes de transmission de mouvement, entre deux roues dentées d'un engrenage à compensation.

Le schéma de la figure 1 illustre les différents paramètres qui influent sur la transmission du déplacement angulaire en fonction du temps $\alpha_1(t)$, de la vitesse angulaire en fonction du temps $\omega_1(t)$ et du couple en fonction du temps $M_1(t)$ dans un engrenage. Ces influences proviennent du système lui-même, et comprennent les défauts des roues dentées, y compris ceux de sa denture. On peut citer notamment le mal rond, le décentrage, l'inclinaison des axes, les variations de pénétration des dentures dues aux variations d'écartement des axes, les jeux des pivots dans les paliers, l'usure, une dent faussée, le vieillissement du lubrifiant. Ces influences proviennent aussi de facteurs extérieurs tels que les chocs et les vibrations, la poussière, la gravité et les variations de température.

Si on prend en compte la somme de tous les défauts potentiels dans la limite des tolérances admises, on peut représenter le déplacement angulaire $\alpha_1$ du mobile menant par rapport au déplacement angulaire $\alpha_2$ du mobile mené dans un système de coordonnées comme celui illustré par la figure 2. Dans un engrenage idéal, la transmission serait représentée par la droite en pointillé inclinée de pente égale au rapport de démultiplication et passant par l'origine des coordonnées $\alpha_1$, $\alpha_2$ dans les deux sens de rotation de ces roues. Dans le cas d'un engrenage classique avec jeu entre les dentures, mais sans défaut, la transmission dans les deux sens de rotation serait parallèle à la droite en pointillé, mais étant donné le jeu, lors du changement de sens de rotation, on aurait une droite horizontale, le déplacement angulaire $\alpha_1$ ne provoquant alors aucun déplacement angulaire $\alpha_2$. Par conséquent le diagramme résultant serait un parallélogramme comme celui illustré en traits mixtes.

Dans la réalité aucune des deux situations illustrées par les diagrammes en pointillé, respectivement en traits mixtes sur la figure 2 n'existe, l'un comme l'autre se rapportant à des cas théoriques. Dans la réalité, on aurait, en cas de jeu dans la denture de l'engrenage, un diagramme dans lequel les différents défauts susmentionnés modifieraient sensiblement la forme du parallélogramme, comme illustré en trait continu sur la figure 2.

En cas de serrage, le jeu n'existe plus, par contre ce défaut se traduit par une diminution du couple transmis, comme illustré par le diagramme de la figure 3 sur lequel on peut constater une forte diminution du couple $M_2$ transmis à chaque passage de dent.

La figure 4 illustre le principe général de dimensionnement qui doit être satisfait pour qu'il y ait compensation, au moins partielle, dans tous les cas, en tenant compte aussi bien de tous les défauts que peut présenter l'engrenage dans la limite des tolérances, sur toute la plage de ces tolérances, que des défauts à venir, notamment ceux liés à l'usure.

Sur cette figure, la partie hachurée de la denture correspond à la partie déformable de manière élastique, le reste correspondant à la partie rigide. La ligne en traits mixtes située dans la partie hachurée correspond au profil théorique de la dent dont la largeur e correspond à un demi pas p de la denture en supposant que la largeur de dent du mobile partenaire soit aussi égale à un demi-pas. Une condition pour qu'il y ait compensation du jeu dans l'engrenage est que les dents en prise des mobiles partenaires présentent au moins deux points de contact simultanés. Pour satisfaire cette condition dans tous les cas, et obtenir la compensation au moins partielle des défauts est que la partie déformable de manière élastique s'étende de part et d'autre du profil théorique de la dent compensatrice, en sorte que l'épaisseur de cette dent compensatrice $e_{SJ}$ est alors supérieure à un demi pas p. Une autre condition pour que cette compensation ait lieu dans tous les cas, est que, en additionnant l'épaisseur $e_{SJ}$ de la dent compensatrice et celle $e_2$ de la dent du mobile partenaire, la longueur résultante soit supérieure au pas p mesuré sur un des cercles primitifs $C_1$ ou $C_2$ d'un des mobiles de l'engrenage. Lorsque l'on parle de l'épaisseur $e_{SJ}$ de la dent compensatrice, on se réfère à son épaisseur nominale (dent relaxée) et non à celle qu'elle a après déformation.

On a dit ci-dessus que l'une des conditions pour permettre de compenser, au moins en partie, tous les défauts d'un engrenage de précision, notamment d'un engrenage pour pièce d'horlogerie, dans la limite des tolérances admises, est que la somme de l'épaisseur $e_{SJ}$ d'une dent avec partie élastique de compensation et de l'épaisseur $e_2$ d'une dent normale de la roue partenaire doit être supérieure au pas p de cet engrenage. Nous allons examiner maintenant dans quelle plage se situe la partie de cette somme supérieure au pas p.

Comme on peut le constater, il est tout à fait possible de satisfaire les conditions susmentionnées en augmentant sensiblement l'épaisseur $e_{SJ}$ des dents compensatrices et de réduire celle $e_2$ des dents normales du mobile partenaire, comme illustré par exemple par la figure 5. Cette solution qui permet d'augmenter l'épaisseur des dents compensatrices, présente l'avantage de donner plus de facilité pour réaliser la partie élastique des dents compensatrices, ce qui peut être intéressant surtout dans le cas d'engrenage pour mécanisme d'horlogerie, en particulier de montre-bracelet, dans lequel l'épaisseur e des dents n'est que de quelques dixièmes de mm. Comme illustré par cette figure 5, la partie hachurée représentant l'élément compensateur élastique de la dent peut être dimensionné jusqu'à ce que l'addition de son épaisseur $e_{SJ}$ et de celle $e_2$ du mobile partenaire atteigne la valeur de une fois et demi celle du pas de l'engrenage.

Dans la pratique, la plage préférable se situe à :

$$e_{SJ} + e_2 = 1,05 \text{ à } 1,25p$$

Les conditions les meilleures pour obtenir le meilleur compromis en fonction des tolérances admises se situant vraisemblablement vers 1,15p, cette valeur pouvant varier sensiblement en fonction des tolérances admises.

Les figures 6 et 8 illustrent deux exemples extrêmes, l'un (figure 6) correspondant à un engrenage dans lequel la distance entre les axes des deux mobiles partenaires est trop faible comme le montrent les cercles primitifs Ci, respectivement $C_2$ de ces mobiles, l'autre (figure 8) correspondant au défaut inverse. Dans le premier cas, il y a serrage, voire blocage des dentures des deux mobiles partenaires, dans l'autre cas, il y a un jeu important.

Les figures 7 et 9 montrent que dans un cas comme dans l'autre, ces deux défauts extrêmes sont compensés par un même mobile compensateur, grâce au dimensionnement objet de la présente invention. En effet, le fait que la partie élastique représentée par la zone hachurée, se situe de part et d'autre du profil théorique illustré par la ligne en traits mixtes dans la zone hachurée permet, dans le cas de la figure 7, d'éviter le serrage, alors que dans le cas de la figure 9, le fait que l'épaisseur $e_{SJ}$ de l'une des dents compensatrices plus celle $e_2$ de l'une des dents du mobile partenaire est supérieure au pas p permet de supprimer le jeu.

Il est évident que la transmission ne sera pas identique dans les deux cas. En effet, dans le cas de l'exemple de compensation illustré par la figure 7, la transmission en régime quasi statique ou dynamique correspond au diagramme de la figure 11. Par contre, dans le cas de la figure 9, en régime quasi statique, la transmission de mouvement correspond au diagramme de la figure 11, mais en régime dynamique, elle correspond au diagramme de la figure 12, dans laquelle on voit que lorsque le mouvement est inversé, il y a d'abord déformation de la partie élastique puis, lorsque l'accélération a été absorbée par la partie à déformation élastique, retour aux conditions du régime quasi statique.

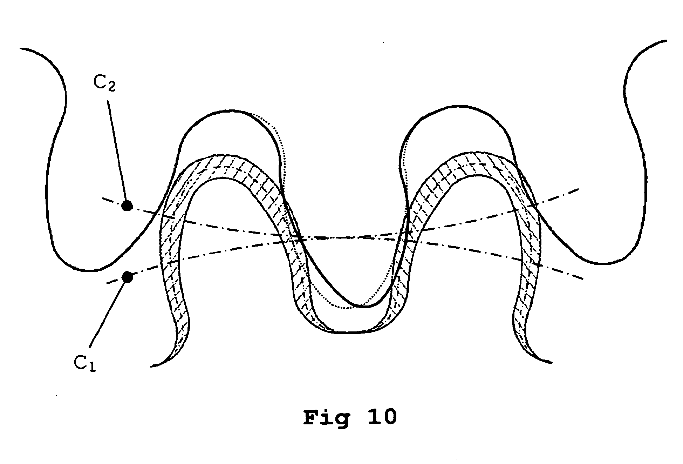

La figure 10 illustre un autre défaut particulièrement redoutable, même si il est plutôt accidentel, celui d'une dent déformée. On a représenté par une ligne formée de points le profil normal de la dent partenaire et par une ligne en trait continu, son profil réel. On peut constater que la partie élastique hachurée de la dent compensatrice permet d'absorber ce défaut et d'en atténuer sensiblement les effets.

On pourrait illustrer d'autres types de défauts, pour lesquels on constaterait les mêmes effets de compensation. On peut aussi imaginer des cas extrêmes, par exemple un cas dans lequel la roue présenterait du mal rond, où l'axe serait décentré et où on aurait un écartement entre axes trop grand. Il peut ne pas être possible de ménager une partie élastique de compensation suffisamment épaisse pour compenser la somme de ces défauts. On peut aussi se trouver confronté à un problème lié à la limite de déformation élastique de la partie élastique de compensation.

Dans ce cas, on peut envisager de fixer une limite à la compensation par déformation de la partie élastique de compensation au-delà de laquelle c'est la partie rigide de la dent qui prend le relais de la transmission. La constante élastique de la partie de compensation peut aussi présenter deux valeurs successives croissantes correspondant à la déformation élastique d'un premier élément de compensation qui, après avoir subi une certaine déformation, prend appui sur un second élément élastique, en sorte que leurs deux constantes élastiques s'additionnent. Enfin en cas de déformation au-delà d'une certaine limite, un des éléments élastiques vient en butée contre la partie rigide de la dent de compensation. A partir de ce degré limite de déformation, l'engrenage se comporte comme un engrenage ordinaire.

En ce qui concerne la répartition entre dents compensatrices et non compensatrices, plusieurs combinaisons sont possibles. On peut notamment avoir toutes les dents d'une seule roue de l'engrenage qui sont des dents compensatrices selon l'invention. On peut aussi avoir toutes les dents compensatrices des deux roues de l'engrenage. On peut encore avoir une dent sur deux d'une seule roue qui est compensatrice, ou encore une dent sur deux des deux roues. Enfin on peut aussi envisager d'avoir une dent sur trois des deux roues qui est compensatrice, mais en prenant soin de les faire engrener de manière qu'une dent compensatrice d'une roue vienne entre deux dents non compensatrice de l'autre roue.

Les parties compensatrices situées de part et d'autre d'une dent ne doivent pas forcément présenter la même constante élastique. En effet suivant le sens de rotation de l'engrenage, on peut avoir des couples résistifs différents, en sorte que pour augmenter le rendement dans un sens de rotation, il est possible de former des dents compensatrices asymétriques avec des parties flexibles ayant des propriétés élastiques différentes des deux côtés de ces dents.

## Revendications

1. Engrenage à compensation de défauts pour mécanisme d'horlogerie, dans lequel au moins certaines des dents régulièrement réparties d'au moins un des mobiles dentés partenaires présentent des zones déformables de manière élastique dans le sens de leurs épaisseurs respectives, les dents en prise desdits mobiles présentant au moins deux points de contact simultanés, **caractérisé en ce que** lesdites zones déformables desdites dents sont des parties élastiques flexibles, l'addition des épaisseurs nominales ($e_{SJ}$, $e_2$) de deux dents en contact desdits mobiles partenaires respectifs, mesurées sur les cercles primitifs ($C_1$, $C_2$) de ces mobiles partenaires, donnant une dimension résultante supérieure au pas (p) de ces mobiles dentés et **en ce que** l'épaisseur des zones déformables que forment les parties élastiques flexibles desdites dents s'étend de part et d'autre du profil théorique de ces dents.

2. Engrenage selon la revendication 1, dans lequel ladite addition des épaisseurs nominales ($e_{SJ}$, $e_2$) desdites dents est comprise entre >p et 1,5p.

3. Engrenage selon la revendication 1, dans lequel ladite addition des épaisseurs nominales ($e_{SJ}$, $e_2$) desdites dents est comprise entre 1,05p et 1,25p.

## Claims

1. A defect-compensating gear assembly for a timepiece mechanism, in which at least some of the uniformly distributed teeth of at least one of the mating toothed moving parts have regions which are elastically deformable in the direction of their respective thicknesses, the meshing teeth of said moving parts having at least two simultaneous contact points, **characterized in that** the said deformable regions of said teeth are flexible elastic portions, the addition of the nominal thicknesses ($e_{SJ}$, $e_2$) of two teeth in contact of said respective mating moving parts, measured along the pitch circles ($C_1$, $C_2$) of these mating moving parts, gives a resultant dimension greater than the pitch (p) of these toothed moving parts, and wherein the thickness of said deformable regions formed by the flexible elastic portions of said teeth extends on either side of the theoretical profile of said teeth.

2. The gear assembly as claimed in claim 1, in which said addition of the nominal thicknesses ($e_{SJ}$, $e_2$) of said teeth is between >p and 1.5p.

3. The gear assembly as claimed in claim 1, in which said addition of the nominal thicknesses ($e_{SJ}$, $e_2$) of said teeth is between 1.05p and 1.25p

## Patentansprüche

1. Getriebe mit Fehlerkompensation für Uhrenmechanismen, bei dem zumindest bestimmte von den regelmässig verteilten Zähnen des zumindest einen der gezahnten Partnerdrehteile Bereiche aufweisen, die in der Richtung ihrer jeweiligen Dicken elastisch verformbar sind, wobei die miteinander im Eingriff stehenden Zähne der Drehteile zumindest zwei gleichzeitige Berührungspunkte aufweisen, **dadurch gekennzeichnet, dass** die verformbaren Bereiche der Zähne elastische, biegsame Abschnitte sind, wobei die Addition der Nenndicken ($e_{SJ}$, $e_2$) zweier in Berührung stehender Zähne der jeweiligen Partnerdrehteile, wenn auf den Teilkreisen ($C_1$, $C_2$) dieser Partnerdrehteile gemessen, eine die Teilung (p) dieser gezahnten Drehteile übersteigende Abmessung ergibt, und **dadurch**, dass die Dicke der verformbaren Bereiche, die von den elastischen biegsamen Abschnitten der Zähne gebildet wird, sich zu beiden Seiten des theoretischen Profils dieser Zähne erstreckt.

2. Getriebe nach Anspruch 1, bei dem die Addition der Nenndicken ($e_{SJ}$, $e_2$) der Zähne zwischen >p und 1,5 p liegt.

3. Getriebe nach Anspruch 1, bei dem die Addition der Nenndicken ($e_{SJ}$, $e_2$) der Zähne zwischen 1,05 p und 1,25 p liegt.

Fig 1

Fig 2

Fig 3

Fig 4

Fig 5

$C_2$

$C_1$

**Fig 6**

$C_2$

$C_1$

**Fig 7**

**Fig 8**

**Fig 9**

**Fig 10**

Fig 11

Fig 12

## RÉFÉRENCES CITÉES DANS LA DESCRIPTION

**Documents brevets cités dans la description**

- JP 63130961 A
- US 4127041 A
- EP 1380772 A
- JP 59117951 A